# EUROPEAN PATENT APPLICATION

(11) **EP 4 753 063 A1**
(43) Date of publication of application: **03.06.2026**
(21) Application number: 25218508.7
(22) Date of filing: 25.11.2025
(51) Int. Cl.: H01M 50/533, H01M 50/536, H01M 50/103, H01M 50/538, H01M 50/54, H01M 50/55

(54) **SECONDARY BATTERY AND METHOD OF MANUFACTURING THE SAME**

(30) Priority: 26.11.2024 KR 20240171431
(71) Applicant: SK On Co., Ltd., Seoul 03161 (KR)
(72) Inventor: KIM, Min Gyu, 34124 Daejeon (KR); JEONG, Taek Eon, 34124 Daejeon (KR)
(74) Representative: Stolmár & Partner Patentanwälte PartG mbB

(57) **Abstract**

A secondary battery includes a first electrode assembly including a first electrode tab that includes a plurality of first uncoated portions, each of the first uncoated portions being bent in a first direction, a second electrode assembly stacked on the first electrode assembly in the first direction wherein the second electrode assembly includes a second electrode tab including a plurality of second uncoated portions, each of the second uncoated portions being bent in a direction opposite to the first direction, and a current collector plate electrically connected to the first electrode tab and the second electrode tab and including a slot exposing the first electrode tab and the second electrode tab.

## Description

### TECHNICAL FIELD

Embodiments of the present disclosure relate to a secondary battery and a method of manufacturing the same. More particularly, embodiments of the present disclosure relate to a secondary battery including an electrode assembly and a cap plate, and a method of manufacturing the same

### BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery module or a battery pack including the secondary battery is being developed and applied as an eco-friendly power source.

The lithium secondary battery may include an electrode assembly including a cathode, an anode and a separation layer (separator), and an electrolyte immersing the electrode assembly. The lithium secondary battery may further include an outer material for housing the electrode assembly and the electrolyte.

For example, the electrode assembly may be manufactured in the form of a jelly roll by winding or folding the separator, or may be manufactured in the form of a stack by stacking the separator.

The outer material may have a shape such as a cylindrical shape, a prismatic shape, etc. The outer material may be connected to a current collector plate, and the current collector plate may be electrically connected to an electrode tab.

The electrode tab may be formed by merging uncoated portions formed from a current collector of the electrode assembly. For example, the uncoated portions may be bent together to form the electrode tab. As the number of the uncoated portions included in one electrode tab increases, bending defects of the uncoated portions may easily occur.

### SUMMARY

According to an aspect of the present disclosure, there is provided a secondary battery having improved operational reliability and process reliability.

According to an aspect of the present disclosure, there is provided a method of manufacturing a secondary battery having improved operational reliability and process reliability.

A secondary battery includes a first electrode assembly including a first electrode tab that includes a plurality of first uncoated portions, each of the first uncoated portions being bent in a first direction; a second electrode assembly stacked on the first electrode assembly in the first direction, wherein the second electrode assembly includes a second electrode tab including a plurality of second uncoated portions, each of the second uncoated portions being bent in a direction opposite to the first direction; and a current collector plate electrically connected to the first electrode tab and the second electrode tab, the current collector plate including a slot exposing the first electrode tab and the second electrode tab.

In some embodiments, the first electrode assembly and the second electrode assembly may be adjacent to each other to define an assembly group. The first electrode tab and the second electrode tab may be spaced apart on one lateral surface of the assembly group in a third direction corresponding to a height direction of the assembly group and being perpendicular to the first direction.

In some embodiments, the current collector plate may include a plurality of the slots arranged along the third direction.

In some embodiments, the slots may include first slots partially exposing the first electrode tab and forming a first slot row, and second slots partially exposing the second electrode tab and forming a second slot row.

In some embodiments, a first slot located at an end region of the first slot row in the third direction among the first slots may have an area greater than an area of a first slot located at a central region of the first slot row.

In some embodiments, a second slot located at an end region of the second slot row in the third direction among the second slots may have an area greater than an area of a second slot located at a central region of the second slot row.

In some embodiments, the slot has a long side in the first direction and a short side in the third direction.

In some embodiments, the secondary battery may further include a welding portion formed at a boundary between the current collector plate, and the first electrode tab or the second electrode tab exposed by the slot along the long side of the slot.

In some embodiments, the welding portion may be formed along the long sides of the slot opposing each other.

In some embodiments, a pair of the welding portions may be spaced apart with the short side of the slot interposed therebetween.

A secondary battery includes an electrode assembly including an electrode tab that includes a plurality of uncoated portions bent in a single direction; and a current collector plate electrically connected to the electrode tab, the current collector plate having a slot row that includes a plurality of slots exposing the electrode tab. A slot located at an end region of the slot row among the slots has a larger size than a slot located at a central region of the slot row.

In some embodiments, the slot may have a long side extending in a bending direction of the uncoated portions or the electrode tab, and a short side extending in an extending direction of the current collector plate.

In some embodiments, the electrode assembly may include a first electrode assembly and a second electrode assembly adjacent in a bending direction of the uncoated portions or the electrode tab. The electrode tab may include a first electrode tab included in the first electrode assembly, and a second electrode tab included in the second electrode assembly.

In some embodiments, the bending direction of the first electrode tab and the bending direction of the second electrode tab may be opposite to each other.

In some embodiments, the current collector plate may contact the first electrode tab and the second electrode tab, and the slots may include first slots exposing the first electrode tab and second slots exposing the second electrode tab.

In a method for manufacturing a secondary battery, uncoated portions are bended in one direction on an electrode tab surface of an electrode assembly to form an electrode tab. A current collector plate including a slot is arranged so that the slot overlaps the electrode tab. An alignment of the uncoated portions included in the electrode tab are inspected through the slot.

In some embodiments, the electrode tab of the electrode assembly passing the alignment inspection of the uncoated portions may be welded with the current collector plate.

In some embodiments, after the welding, housing the electrode assembly welded to the current collector plate may be housed together with the current collector plate in a case. An electrolyte solution may be injected into the case housing the electrode assembly.

In some embodiments, in the inspection of the alignment, bending or folding defects in the uncoated portions may be observed.

In some embodiments, manufacture process conditions may be modified by reflecting the alignment of the uncoated portions observed by the alignment inspection.

According to embodiments of the present disclosure, an alignment state (bending state/folding state) of uncoated portions included in an electrode tab may be inspected through an opening of a current collector plate. Accordingly, electrical connection or welding stability between the electrode tab and the current collector plate may be easily achieved.

According to embodiments of the present disclosure, the electrode tabs of adjacent electrode assemblies may be bonded to the current collector plate together on one side surface or one lateral surface of an assembly group. Accordingly, a bonding space between the current collector plate and the electrode assembly may be reduced, and a size of the electrode assembly may be relatively increased. Thus, an entire energy density of the secondary battery may be increased.

The lithium secondary battery of the present disclosure may be widely applied in green technology fields such as an electric vehicle, a battery charging station, a solar power generation, a wind power generation, etc., using a battery, etc. The secondary battery according to the present disclosure may be used for eco-friendly electric vehicles and hybrid vehicles to prevent a climate change by suppressing air pollution and greenhouse gas emissions. etc.

### BRIEF DESCRIPTION OF THE DRAWINGS

FIG. 1 is a schematic exploded perspective view of a secondary battery in accordance with example embodiments.
FIG. 2 is a schematic exploded perspective view for describing stack units included in an electrode assembly according to embodiments.
FIG. 3 is a schematic exploded perspective view illustrating an assembly group according to embodiments.
FIG. 4 is a schematic exploded perspective view illustrating an assembly group according to embodiments.
FIG. 5 is a schematic cross-sectional view illustrating a combination of an electrode assembly, an electrode tab and a current collector plate according to embodiments.
FIG. 6 is a schematic plan view illustrating an arrangement of a current collector plate and an electrode tab according to embodiments.
FIGS. 7 and 8 are plan views illustrating examples of misalignment of uncoated portions included in an electrode tab.
FIG. 9 is a schematic plan view illustrating a secondary battery according to embodiments.
FIG. 10 is a schematic plan view illustrating a secondary battery according to embodiments.
FIG. 11 is a flowchart illustrating a method of manufacturing a secondary battery according to embodiments.

### DETAILED DESCRIPTION OF THE EMBODIMENTS

Embodiments of the present disclosure provide a secondary battery including an electrode assembly and a case. Embodiments of the present disclosure provide a method of manufacturing the secondary battery.

The terms "first", "second", "upper surface", "lateral portion", "one surface", "the other surface", "one end", "the other end", etc., herein are used relatively to distinguish different elements, positions, etc., and do not limit absolute positions.

The term "first direction" as used herein may indicate a direction in which a first electrode tab 120 is bent (a bending direction). The first direction may indicate a direction in which a first electrode assembly 100 and a second electrode assembly 200 are stacked. The first direction may indicate a width direction of the first electrode assembly 100 and/or the second electrode assembly 200. The first direction may indicate a width direction of an assembly group AG.

The term "second direction" as used herein may indicate a length direction of the first electrode assembly 100 and/or the second electrode assembly 200. The second direction may indicate a direction from one lateral surface to the other lateral surface of the first electrode assembly 100 and/or the second electrode assembly 200. The second direction may indicate a length direction of the assembly group AG.

The term "third direction" as used herein may indicate a height direction of the first electrode assembly 100 and/or the second electrode assembly 200. The first direction, the second direction and the third direction may be perpendicular to each other. The third direction may represent a height direction of the assembly group AG.

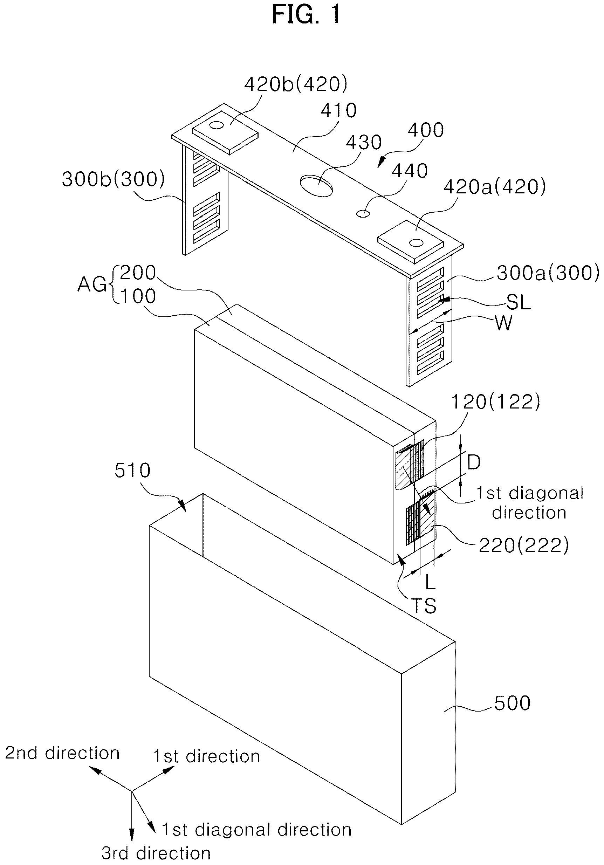

FIG. 1 is a schematic exploded perspective view of a secondary battery in accordance with example embodiments.

Referring to FIG. 1, a secondary battery includes the first electrode assembly 100 and the second electrode assembly 200.

The first electrode assembly 100 and the second electrode assembly 200 are disposed in the first direction. For example, the second electrode assembly 200 is stacked on the first electrode assembly 100 in the first direction. In an embodiment, the second electrode assembly 200 may be directly disposed on the first electrode assembly 100.

For example, the first electrode assembly 100 and the second electrode assembly 200 may be combined, coupled, attached or assembled through wide surfaces parallel to the third and second directions to provide a single battery unit. The term "wide surface" used herein may refer to an outer surface having the largest area among outer surfaces of the electrode assembly.

In some embodiments, the wide surfaces of the first electrode assembly 100 and the second electrode assembly 200 may be attached to each other by an adhesive.

As described above, the first electrode assembly 100 and the second electrode assembly 200 may be adjacent to each other through the wide surfaces to form the assembly group AG.

The first electrode assembly 100 includes a first electrode tab 120 including a plurality of first uncoated portions 122 bent in the first direction. The second electrode assembly 200 includes a second electrode tab 220 including a plurality of second uncoated portions 222 bent in a direction opposite to the first direction and parallel to the first surface.

For example, each of the first electrode assembly 100 and the second electrode assembly 200 may include a plurality of repeatedly stacked electrodes and a separator interposed between the electrodes.

Each of the plurality of electrodes may include an uncoated portion. For example, each of the electrodes included in the first electrode assembly 100 may include the first uncoated portion 122, and each of the electrodes included in the second electrode assembly 200 may include the second uncoated portion 222. The first electrode tab 120 may be formed by assembling or merging a plurality of the first uncoated portions 122. The second electrode tab 220 may be formed by assembling or merging a plurality of the second uncoated portions 222.

In an embodiment, a plurality of the first uncoated portions 122 may not be additionally bonded or pressed to each other by an additional process except for the bending. In an embodiment, a plurality of the second uncoated portions 222 may not be additionally bonded or pressed to each other except for the bending.

For example, the number of the plurality of the first uncoated portions 122 included in the first electrode tab 120 may be from 5 to 100, or from 10 to 50. The number of the plurality of the second uncoated portions 222 included in the second electrode tab 220 may be from 5 to 100, or from 10 to 50. In the above range, spatial efficiency may be improved while also improving power properties of the secondary battery.

In example embodiments, the first electrode tab 120 may be bent in the first direction, and the second electrode tab 220 may be bent in a direction parallel and opposite to the first direction. For example, a plurality of the first uncoated portions 122 may be bent in the first direction, and a plurality of the second uncoated portions 222 may be bent in the direction opposite to the first direction.

A lateral surface of the assembly group AG in the second direction may be provided as an electrode tab surface TS on which the electrode tabs 120 and 220 are bent and seated. In example embodiments, an area of the electrode tab surface TS may be increased by stacking the first electrode assembly 100 and the second electrode assembly 200. Accordingly, the first electrode tab 120 and the second electrode tab 220 may not protrude to an outside of the electrode tab surface TS.

Thus, an additional bending process for the protruding portions of the electrode tabs 110 and 120 may be unnecessary, and a thickness of the secondary battery may be reduced. Therefore, increased capacity and energy density may be provided from the same size.

In example embodiments, the first electrode tab 120 and the second electrode tab 220 may not overlap in the second direction. For example, the first electrode tab 120 and the second electrode tab 220 may be physically separated or spaced apart from each other in the third direction on the electrode tab surface TS of the assembly group AG. Accordingly, heat generation and current leakage of the secondary battery due to a contact between the first electrode tab 120 and the second electrode tab 220 may be prevented.

In some embodiments, the first electrode tab 120 and the second electrode tab 220 may face each other in a first diagonal direction inclined with respect to the first direction.

For example, the first diagonal direction may be a direction from a center of a first uncoated portion of the first uncoated portions 122 farthest from the second electrode assembly 200 to a center of a second uncoated portion of the second uncoated portions 222 farthest from the first electrode assembly 100. The center of the first uncoated portion may represent a central point in a state in which the first uncoated portion is not bent, and the center of the second uncoated portion may represent a central point in a state in which the second uncoated portion is not bent.

The secondary battery may include a current collector plate 300 that may entirely cover the first electrode tab 120 and the second electrode tab 220 to be electrically connected to the first electrode tab 120 and the second electrode tab 220.

In an embodiment, the current collector plate 300 may include a planar plate shape. Accordingly, a volume of the current collector plate 300 may be reduced to improve a capacity and an energy density of the secondary battery, Further, a contact area of the current collector plate 300 and the electrode tabs 120 and 220 may be increased to reduce a resistance of the secondary battery. The current collector plate 300 may include a conductive metal plate.

In some embodiments, a length L in the first direction of each of the plurality of the first uncoated portions 122 may be 0.5 times or less of a width W of the current collector plate 300, and a length L in the first direction of each of the plurality of the second uncoated portions 222 may be 0.5 times or less of the width W of the current collector plate 300. In the above range, the electrode tabs 120 and 220 may not protrude to the outside of the electrode tab surface TS, and the additional bending process may be omitted and a volume of the secondary battery may be reduced.

In an embodiment, the length L of each of the plurality of the first uncoated portions 122 and the plurality of the second uncoated portions 222 in the first direction may be from 0.01 times to 0.5 times, from 0.05 times to 0.5 times, or from 0.1 times to 0.5 times of the width W of the current collector plate 300. In the above ranges, connection stability between the current collector plate 300 and the electrode tabs 120 and 220 may be improved.

In some embodiments, a length of each of the first electrode tab 120 and the second electrode tab 220 in the third direction may be less than 0.5 times, from 0.1 times to 0.4 times, or from 0.1 times to 0.3 times of a length of the assembly group AG in the third direction. In the above range, power properties and spatial efficiency of the secondary battery may be improved while preventing an overlap of the first electrode tab 120 and the second electrode tab 220.

In some embodiments, a shortest distance D between the first electrode tab 120 and the second electrode tab 220 may be less than or equal to a length of the first electrode tab 120 in the third direction. In the above range, the heat generation and damages due to the contact between the electrode tabs 120 and 220 may be suppressed, and spatial efficiency of the secondary battery may be improved.

In some embodiments, the shortest distance D between the first electrode tab 120 and the second electrode tab 220 may be less than or equal to a length of the second electrode tab 220 in the third direction. In the above range, the heat generation and damages due to the contact between the electrode tabs 120 and 220 may be suppressed, and spatial efficiency of the secondary battery may be improved.

In some embodiments, a ratio of a length of the second electrode tab 220 in the first direction to a length of the first electrode tab 120 in the first direction to may be in a range from 0.5 to 1.5, or from 0.8 to 1.2. In the above range, an over-current in a specific region of the secondary battery may be prevented, and life-span properties and driving stability may be improved.

In an embodiment, the length of the first electrode tab 120 in the first direction may be substantially the same as the length of the second electrode tab 220 in the first direction.

The secondary battery may include a case 500 accommodating the assembly group AG. The case 500 may provide outer surface of the secondary battery. In an embodiment, the case 500 may include a metal. Accordingly, the case 500 may maintain a rigidity, and impact to the assembly group AG may be alleviated.

In some embodiments, the case 500 may be a substantially rectangular prismatic case as illustrated in FIG. 1. However, the shape of the case 500 may be appropriately changed in consideration of an alignment of the current collecting plate 300, efficiency of inspection of misalignment of the uncoated portions 122 and 222 through a slot SL as will described later, etc.

The case 500 may include an accommodation space 510 configured to accommodate the assembly group AG therein. For example, the case 500 may include an opening opened in the third direction.

The secondary battery may include a cap plate 400. The cap plate 400 may be assembled with the case 500. For example, the cap plate 400 may be assembled with the opening of the case 500 to seal the accommodation space 510.

The cap plate 400 may include a cover 410. The cover 410 may have a plate shape. The cap plate 400 may be coupled to the case 500 through the cover 410.

The cap plate 400 may include an injection hole 440. The injection hole 440 may penetrate the cover 410. An electrolyte solution may be injected into the case 500 through the injection hole 440.

The cap plate 400 may further include a vent hole 430. The vent hole 430 may penetrate the cover 410. The accommodation space 510 in the case 500 may communicate with an outside through the vent hole 430. A barrier layer (not illustrated) may be formed in the vent hole 430. The barrier layer may be ruptured when an internal pressure of the case 500 is greater than or equal to a predetermined pressure. Accordingly, a gas in the accommodation space 510 of the case 500 may be discharged to the outside of the case 500 and the internal pressure of the case 500 may be reduced.

The cap plate 400 may include an electrode terminal 420. The electrode terminal 420 may be coupled through a top surface of the cover 410. For example, the cover 410 may include a terminal opening to which the electrode terminal 420 may be coupled. The terminal opening may extend through the cover 410. The electrode terminal 420 may be connected to the assembly group AG through the current collector plate 300 through the terminal opening.

The electrode terminal 420 may include a cathode terminal 420a and an anode terminal 420b. The cathode terminal 420a may be electrically connected to the cathode tab. The anode terminal 420b may be electrically connected to the anode tab.

As described above, the current collector plate 300 may be adhered or bonded to the electrode tabs 120 and 220. The current collector plate 300 may extend in the third direction, and may be assembled or attached to the cap plate 400 to be connected to the electrode terminal 420. The electrode terminal 420 and the electrode tabs 120 and 220 may be electrically connected to each other by the current collector plate 300.

The current collector plate 300 may include a cathode current collector plate 300a and an anode current collector plate 300b. The cathode current collector plate 300a may be connected to the cathode tab and the cathode terminal 420a, and the anode current collector plate 300b may be connected to the anode tab and the anode terminal 420b.

As will be described later, the cathode tabs 120a and 220a of each of the first electrode tab 120 and the second electrode tab 220 may be disposed on the electrode tab surface TS corresponding to one lateral surface in the second direction to be connected to the cathode current collector plate 300a. The anode tabs 120b and 220b of each of the first electrode tab 120 and the second electrode tab 220 may be disposed on the electrode tab surface TS corresponding to the other lateral surface in the second direction to be connected to the anode current collector plate 300b.

The cathode current collector plate 300a and the anode current collector plate 300b may be connected to one lateral portion and the other lateral portion of the cover 410 of the cap plate 400, in the second direction, respectively.

According to embodiments of the present disclosure, the current collector plate 300 includes the slot SL. The slot SL may extend through the current collector plate 300, and may partially expose the electrode tabs 120 and 220 in the second direction. In example embodiments, a plurality of the slots SL may be formed in the current collector plate 300 along the third direction.

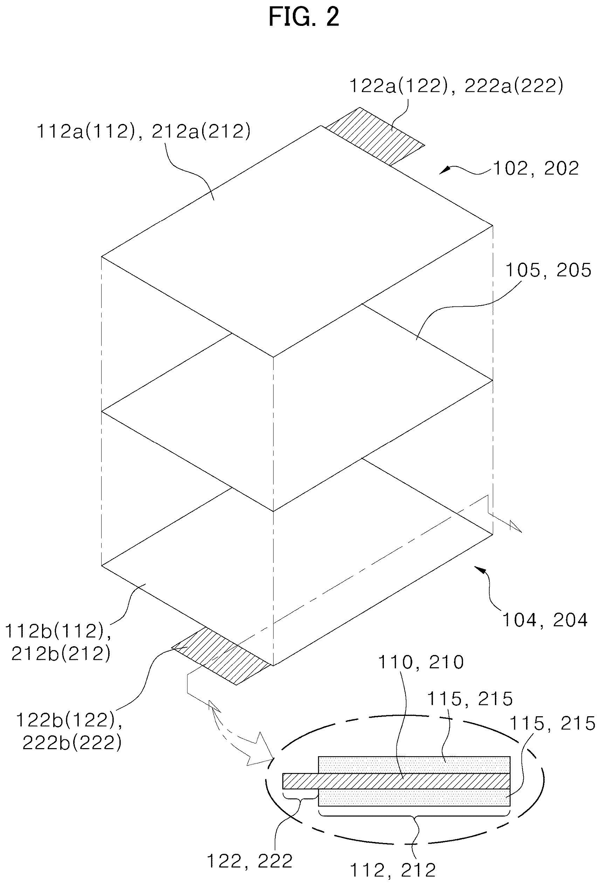

FIG. 2 is a schematic exploded perspective view for describing stack units included in an electrode assembly according to embodiments.

Each of the first electrode assembly 100 and the second electrode assembly 200 may include a jelly roll shape in which a plurality of the stack units are repeatedly stacked. For example, the electrode assemblies 100 and 200 may be formed by winding, stacking, zigzag folding (z-folding), stack-folding, or the like, of the separator 105 and 205.

Referring to FIG. 2, the stack unit of the first electrode assembly 100 may include a first cathode 102, a first anode 104, and a first separator 105 interposed between the first cathode 102 and the first anode 104.

In example embodiments, the first cathode 102 and the first anode 104 may be alternately and repeatedly stacked with the first separator 105 interposed therebetween to define the first electrode assembly 100.

The first cathode 102 and the first anode 104 may each include a first coated portion 112 and the first uncoated portion 122.

The first coated portion 112 may include a first current collector 110 and a first active material layer 115 disposed on at least one surface of the first current collector 110. The first uncoated portion 122 may represent a portion of the first current collector 110 where the first active material layer 115 is not disposed. The first uncoated portion 122 may extend from the first current collector 110 included in the first coated portion 112 and protrude from the first coated portion 112.

In an embodiment, the first active material layer 115 may be disposed on both surfaces of the first current collector 110.

The first coated portion 112 may include a first cathode coated portion 112a and a first anode coated portion 112b. In some embodiments, the first cathode coated portion 112a and the first anode coated portion 112b may overlap each other in a direction in which electrodes are stacked (e.g., in the first direction). For example, the first separator 105 may be interposed between the first cathode coated portion 112a and the first anode coated portion 112b.

The first uncoated portion 122 may include a first cathode uncoated portion 122a and a first anode uncoated portion 122b. In some embodiments, the first cathode uncoated portion 122a and the first anode uncoated portion 122b may protrude in opposite directions. For example, the first cathode uncoated portion 122a may protrude in one direction from the first cathode coated portion 112a, and the first anode uncoated portion 122b may protrude from the first anode coated portion 112b in a direction parallel and opposite to the one direction.

The stack unit of the second electrode assembly 200 may include a second cathode 202, a second anode 204, and a second separator 205 interposed between the second cathode 202 and the second anode 204.

In example embodiments, the second cathode 202 and the second anode 204 may be alternately and repeatedly stacked with the second separator 205 interposed therebetween to define the second electrode assembly 200.

The second cathode 202 and the second anode 204 may each include a second coated portion 212 and the second uncoated portion 222.

The second coated portion 212 may include a second current collector 210 and a second active material layer 215 disposed on at least one surface of the second current collector 210. The second uncoated portion 222 may represent a portion of the second current collector 210 where the second active material layer 215 is not disposed. The second uncoated portion 122 may extend from a portion of the second current collector 210 of the second coated portion 212 and protrude from the second coated portion 212.

In an embodiment, the second active material layer 215 may be disposed on both surfaces of the second current collector 210.

The second coated portion 212 may include a second cathode coated portion 212a and a second anode coated portion 212b. In some embodiments, the second cathode coated portion 212a and the second anode coated portion 212b may overlap each other in a direction in which the electrodes are stacked (e.g., in the first direction). For example, the second separator 205 may be interposed between the second cathode coated portion 212a and the second anode coated portion 212b.

The second uncoated portion 222 may include a second cathode uncoated portion 222a and a second anode uncoated portion 222b. In example embodiments, the second cathode uncoated region 222a and the second anode uncoated region 222b may protrude in opposite directions. For example, the second cathode uncoated portion 222a may protrude from the second cathode coated portion 212a in one direction, and the second anode uncoated portion 222b may protrude from the second anode coated portion 212b in in a direction parallel and opposite to the one direction.

In example embodiments, the cathodes 102 and 202 may include a cathode current collector and a cathode active material layer disposed on at least one surface of the cathode current collector.

For example, the cathode current collector may include stainless steel, nickel, aluminum, titanium, or an alloy thereof. The cathode current collector may include aluminum or stainless steel surface-treated with carbon, nickel, titanium, or silver. For example, a thickness of the anode current collector may be in a range from 5 µm to 50 µm.

The cathode active material layer may include a cathode active material. For example, the cathode active material may include a compound capable of reversibly intercalating and deintercalating lithium ions.

In example embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may have a layered structure or a crystal structure represented by Chemical Formula 1.

[Chemical Formula 1] LiₓNiₐM_{b}O_{2+z}

In Chemical Formula 1, 0.9≤x≤1.2, 0.5≤a≤0.99, 0.01≤b≤0.5, and -0.5≤z≤0.1. As described above, M may include Co, Mn and/or Al.

The chemical structure represented by Chemical Formula 1 represents a bonding relationship included in the layered structure or the crystal structure of the cathode active material, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-nickel metal oxide may include a layered structure or a crystal structure represented by Chemical Formula 1-1.

[Chemical Formula 1-1] LiₓNiₐM1_{b1}M2_{b2}O_{2+z}

In Chemical Formula 1-1, M1 may include Co, Mn and/or Al. M2 may include the above-described auxiliary element. In Chemical Formula 1-1, 0.9≤x≤1.2, 0.6≤a≤0.99, 0.01≤b1+b2≤0.4, and -0.5≤z≤0.1.

The cathode active material above may further include a doping element or a coating element. For example, elements substantially the same as or similar to the above-described auxiliary elements may be used as the doping element or the coating element. For example, the above-described elements may be used alone or in a combination of two or more therefrom as the doping element or the coating element.

The coating element or the doping element may be present on a surface of the lithium-nickel metal oxide particle, or may penetrate through the surface of the lithium-nickel metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

The content of Ni in the NCM-based lithium oxide (e.g., a mole fraction of nickel based on the total number of moles of nickel, cobalt and manganese) may be 0.5 or more, 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., LiFePO₄).

In some embodiments, the cathode active material may include a Li-rich layered oxide (LLO)/OLO (Over-Lithiated Oxide)-based active material, a Mn-rich active material, a Co-less-based active material, etc., having, e.g., a chemical structure or a crystal structure represented by Chemical Formula 2.

[Chemical Formula 2] p[Li₂MnO₃]·(1-p)[Li_{q}JO₂]

In Chemical Formula 2, 0<p<1, 0.9≤q≤1.2, and J may include at least one element from Mn, Ni, Co, Fe, Cr, V, Cu, Zn, Ti, Al, Mg and B.

In example embodiments, the anodes 104 and 204 may include an anode current collector and an anode active material layer disposed on at least one surface of the anode current collector.

For example, the anode current collector may include a copper foil, a nickel foil, a stainless steel foil, a titanium foil, a nickel foam, a copper foam, a polymer substrate coated with a conductive metal, etc. A thickness of the anode current collector may be, e.g., in a range from 10 µm to 50 µm.

The anode active material layer 130 may include an anode active material.

A material capable of adsorbing and desorbing lithium ions may be used as the anode active material. For example, the anode active material may include carbon-based materials such as a crystalline carbon, an amorphous carbon, a carbon composite, a carbon fiber; a lithium metal; a lithium alloy; a silicon (Si)-containing material or a tin (Sn)-containing material, etc. These may be used alone or in a combination of two or more therefrom.

For example, the amorphous carbon may include a hard carbon, cokes, a mesocarbon microbead (MCMB), a mesophase pitch-based carbon fiber (MPCF), etc.

For example, the crystalline carbon may include natural graphite, artificial graphite, a graphitized cokes, a graphitized MCMB, a graphitized MPCF, etc.

The lithium metal may include a pure lithium metal or a lithium metal having a protective layer formed thereon for inhibiting a dendrite growth. In an embodiment, a lithium metal-containing layer deposited or coated on an anode current collector may be used as the anode active material layer. In an embodiment, a lithium thin film layer may be used as the anode active material layer.

An element capable of being included in the lithium alloy may include aluminum, zinc, bismuth, cadmium, antimony, silicon, lead, tin, gallium, indium, etc. These may be used alone or in a combination of two or more therefrom.

The silicon-containing material may provide an increased capacity. The silicon-containing material may include Si, a SiOx (0<x<2), a metal-doped SiOx (0<x<2), a siliconcarbon composite, etc.

The metal may include lithium and/or magnesium, and the metal-doped SiOx (0<x<2) may include a metal silicate.

In some embodiments, the electrode composition may further include a conductive material.

For example, the conductive material may be added to improve a conductivity and/or a mobility of lithium ions or electrons. For example, the conductive material may include a carbon-based conductive material such as graphite, carbon black, acetylene black, Ketjen black, graphene, a carbon nanotube, a VGCF (vapor-grown carbon fiber), a carbon fiber, etc.; and/or a metal-based conductive material including tin, tin oxide, titanium oxide, a perovskite material such as LaSrCoO₃, LaSrMnO₃, etc. These may be used alone or in a combination of two or more therefrom.

In some embodiments, the separator 105 and 205 may prevent an electrical short circuit between the cathode 102 and 202 and the anode 104 and 204 while maintaining a flow of ions. For example, a thickness of the separator may be in a range from 10 µm to 20 µm.

For example, the separator 105 and 205 may include a porous polymer film or a porous non-woven fabric.

The porous polymer film may include a polyolefin-based polymer such as an ethylene polymer, a propylene polymer, an ethylene/butene copolymer, an ethylene/hexene copolymer, an ethylene/methacrylate copolymer, etc. These may be used alone or in a combination of two or more therefrom.

The porous non-woven fabric may include a high melting point glass fiber, a polyethylene terephthalate fiber, etc.

The separator 105 and 205 may include a ceramic-based material. For example, inorganic particles may be coated on the polymer film or dispersed in the polymer film to improve a heat resistance.

The separator 105 and 205 may have a single-layered or multi-layered structure including the polymer film and/or the non-woven fabric as described above.

The electrode assemblies 100 and 200 may be accommodated together with the electrolyte solution in the case 500 to define a lithium secondary battery. In example embodiments, a non-aqueous electrolyte solution may be used as the electrolyte solution. For example, the non-aqueous electrolyte solution may be injected into the case 500 through the injection hole 440 of the cap plate 400.

The non-aqueous electrolyte solution may include a lithium salt as an electrolyte and an organic solvent. The lithium salt may be expressed as Li⁺X⁻, and the anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, etc. These may be used alone or in a combination of two or more therefrom.

The non-aqueous electrolyte solution may further include an additive. The additive may include, e.g., a cyclic carbonate compound, a fluorine-substituted carbonate compounds, a sultone compound, a cyclic sulfate compound, a cyclic sulfite compound, a phosphate compound, a borate compounds, etc. These may be used alone or in a combination of two or more therefrom.

The cyclic carbonate compound may include vinylene carbonate (VC), vinyl ethylene carbonate (VEC), etc.

The fluorine-substituted carbonate compounds may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may be used instead of the above-described non-aqueous electrolyte solution. In this case, the lithium secondary battery may be manufactured in the form of an all-solid-state battery. Additionally, a solid electrolyte layer may be disposed between the cathode 102 and 202 and the anode 104 and 204 instead of the above-described separator 105 and 205.

The solid electrolyte may include a sulfide-based electrolyte. In non-limiting examples, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m, n are positive numbers, Z is Ge, Zn or Ga), Li₂S-GeS₂, Li₂S-SiS₂-Li₃PO₄, Li₂S-SiS₂-LiₚMO_{q} (p, q is a positive number, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These can be used alone or in combination of two or more therefrom.

In an embodiment, the solid electrolyte may include, e.g., an oxide-based amorphous solid electrolyte such as Li₂O-B₂O₃-P₂O₅, Li₂O-SiO₂, Li₂O-B₂O₃, Li₂O-B₂O₃-ZnO, etc.

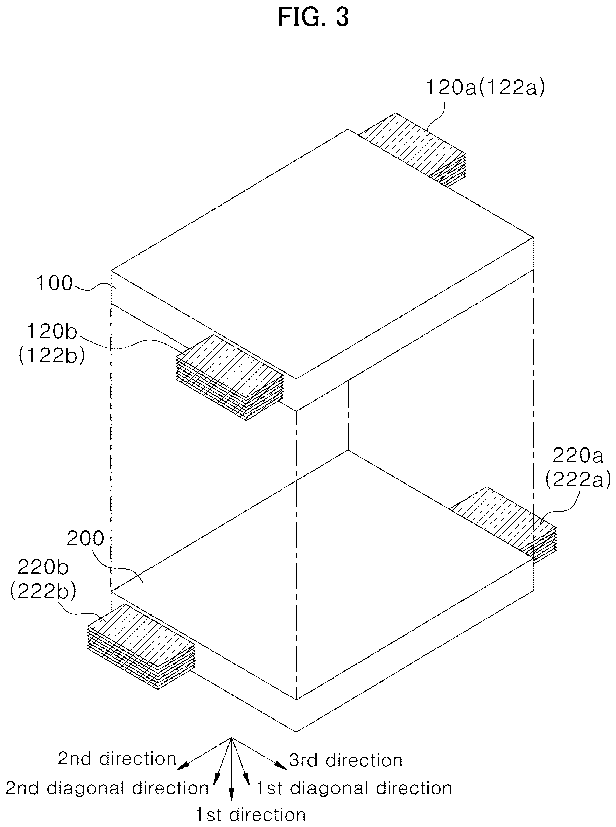

FIG. 3 is a schematic exploded perspective view illustrating an assembly group according to embodiments.

In FIG. 3, the electrode tabs 120a, 120b, 220a, and 220b are illustrated in a non-bent state for convenience of descriptions. However, as described above, the electrode tabs 120a, 120b, 220a and 220b may be bent toward the electrode tab surface TS.

Referring to FIG. 3, the first electrode tab 120 included in the first electrode assembly 100 may include the first cathode tab 120a protruding from one lateral surface of the first electrode assembly 100 and being formed by bending the first cathode uncoated portions 122a, and the first anode tab 120b protruding from the other lateral surface of the first electrode assembly 100 and being formed by bending the first anode uncoated portions 122b of the first electrode assembly 100.

The second electrode tab 220 included in the second electrode assembly 200 may include the second cathode tab 220a protruding from one lateral surface of the second electrode assembly 200 and being formed by bending the second cathode uncoated portions 222a, and the second anode tab 220b protruding from the other lateral surface of the second electrode assembly 200 and being formed by bending the second anode uncoated portions 222b.

In some embodiments, the first cathode tab 120a and the first anode tab 120b may not be disposed on the same line in the second direction perpendicular to the first direction. The second cathode tab 220a and the second anode tab 220b may not be disposed on the same line in the second direction.

In some embodiments, the first anode tab 120b and the second anode tab 220b may oppose each other in a diagonal direction inclined with respect to the first direction and the third direction as described with reference to FIG. 1. Accordingly, heat generation and current leakage of the secondary battery due to a contact between the first anode tab 120b and the second anode tab 220b may be prevented.

As described with reference to FIG. 1, the first cathode tab 120a and the second cathode tab 220a may oppose each other in a diagonal direction (e.g., the first diagonal direction) inclined with respect to the first direction and the third direction on the electrode tab surface TS of the one lateral surface in the second direction of the assembly group AG.

In an embodiment, the first anode tab 120b and the second anode tab 220b may oppose each other in a second diagonal direction crossing the first diagonal direction and being parallel to the electrode tab surface TS of the other lateral surface in the second direction of the assembly group AG.

The second diagonal direction may be a direction from a center of the first anode uncoated portion farthest from the second electrode assembly 200 among the first anode uncoated portions 122b to a center of the second anode uncoated portion farthest from the first electrode assembly 100 among the second anode uncoated portions 222b.

The center of the first anode uncoated portion may represent a central point in a state where the first anode uncoated portion is not bent, and the center of the second anode uncoated portion may represent a central point in a state where the second anode uncoated portion is not bent.

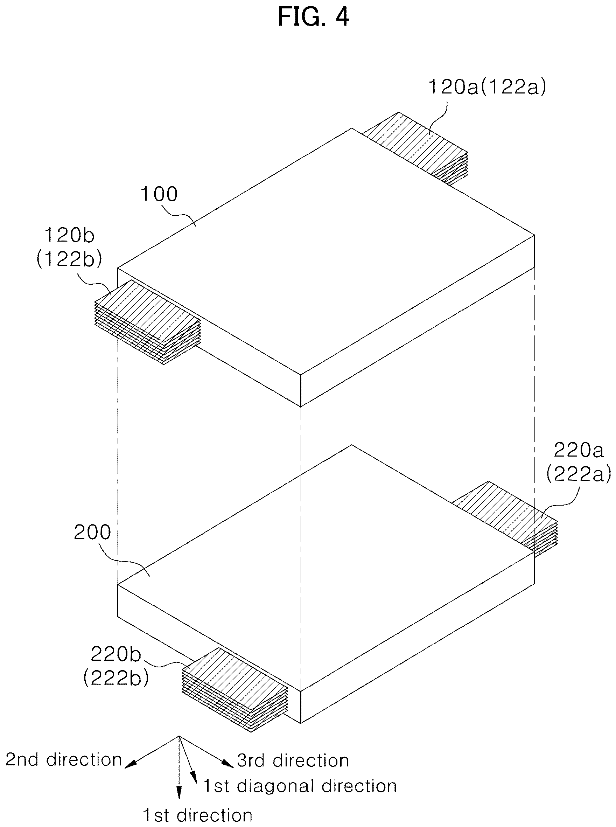

FIG. 4 is a schematic exploded perspective view illustrating an assembly group according to embodiments. Detailed descriptions on structures and elements substantially the same as or similar to those described with reference to FIG. 3 are be omitted.

Referring to FIG. 4, the first cathode tab 120a and the first anode tab 120b of the first electrode assembly 100 may be disposed on the same line in the second direction. The second cathode tab 220a and the second anode tab 220b of the second electrode assembly 200 may be disposed on the same line in the second direction.

In this case, the first anode tab 120b and the second anode tab 120b may oppose each other to be spaced apart from each other in the first diagonal direction on the electrode tab surface TS of the other lateral surface in the second direction of the assembly group AG.

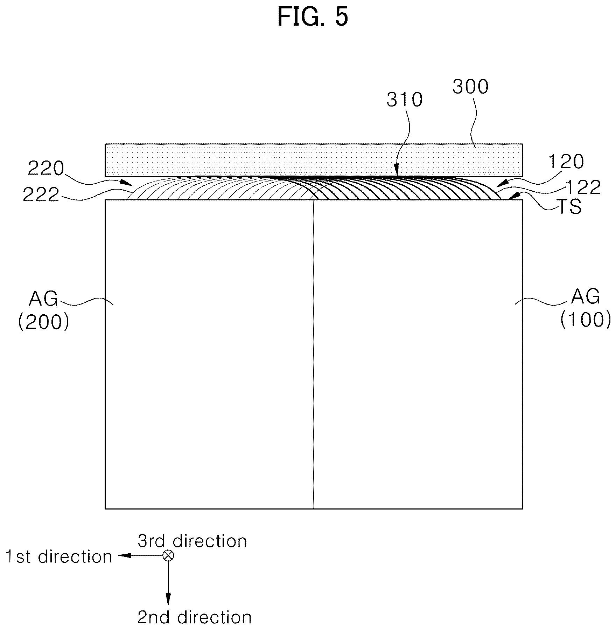

FIG. 5 is a schematic cross-sectional view illustrating a combination of an electrode assembly, an electrode tab and a current collector plate according to embodiments.

Referring to FIG. 5, the first uncoated portions 122 and the second uncoated portions 222 may protrude to be aligned on the electrode tab surface TS of the assembly group AG including the first electrode assembly 100 and the second electrode assembly 200. The first electrode tab 120 that may substantially contact the electrode tab surface TS may be defined by bending the first uncoated portions 122 in one direction (the first direction). The second electrode tab 220 that may substantially contact the electrode tab surface TS may be defined by bending the second uncoated portions 222 in a direction opposite to the one direction.

Although FIG. 5 illustrates a state in which the uncoated portions 122 and 222 do not completely lie down, the uncoated portions 122 and 222 may be pressed by the current collector plate 300 to substantially completely lie down in the bending direction. Thus, the current collector plate 300 may become closer to the electrode tab surface TS of the assembly group AG.

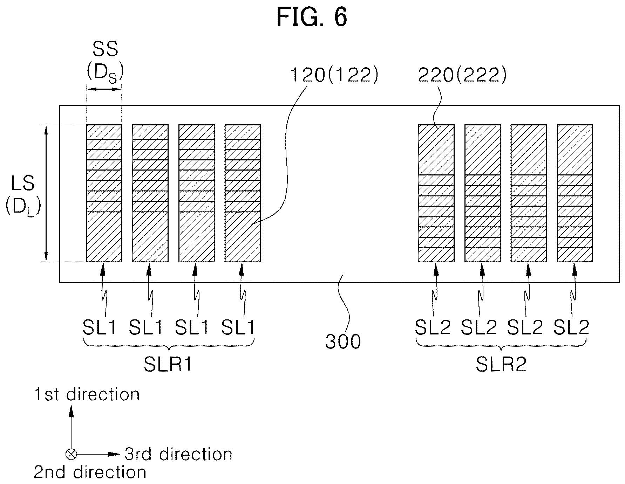

FIG. 6 is a schematic plan view illustrating an arrangement of a current collector plate and an electrode tab according to embodiments.

Referring to FIG. 6, as described above, the current collector plate 300 includes the slot SL partially exposing the electrode tab.

The slot may include a first slot SL1 exposing the first electrode tab 120 and the first uncoated portions 122 included in the first electrode tab 120, and a second slot SL2 exposing the second electrode tab 220 and the second uncoated portions 222 included in the second electrode tab 220.

A plurality of the first slots SL1 may be arranged along the third direction to define a first slot row SLR1. A plurality of the second slots SL2 may be arranged along the third direction to define a second slot row SLR2.

An alignment state (e.g., a bending and folding state) of the uncoated portions 122 and 222 may be observed or detected through the slot SL. Further, a plurality of the first slots SL1 and the second slots SL2 are arranged, so that the bending and folding states of the uncoated portions 122 and 222 may be observed in different regions of each of the first electrode tab 120 and the second electrode tab 220.

The slot SL may extend in a bending direction of the uncoated portions 122 and 222. The slot SL may have a long side LS extending in the bending direction (the first direction) and a short side SS extending in an extending direction (the third direction) of the current collector plate 300. A length D_{L} of the long side of the slot SL may be greater than a length D_{S} of the short side.

In some embodiments, the length D_{L} of the long side of the slot SL may be greater than or equal to a length of the electrode tabs 120 and 220. In an embodiment, the length D_{L} of the long side may be greater than the length of the electrode tabs 120 and 220.

Thus, overall bending/folding failure and misalignment of the uncoated portions 122 and 222 may be inspected.

In some embodiments, a ratio of the length D_{L} of the long side to the length D_{S} of the short side of the slot SL may be in a range from 3 to 10, from 3 to 8, from 4 to 8, or from 5 to 8. In some embodiments, an aperture ratio of the current collector plate 300 (a ratio of an area of the slot SL among a total area of the current collector plate 300 observed in the second direction) may be in a range from 10 % to 60 %, from 20 % to 60 %, or from 30 % to 60 %.

In the above ranges, defects of the uncoated portions 122 and 222 may be effectively managed while sufficiently achieving bonding stability and conductivity of the current collector plate 300 and the electrode tabs 120 and 220.

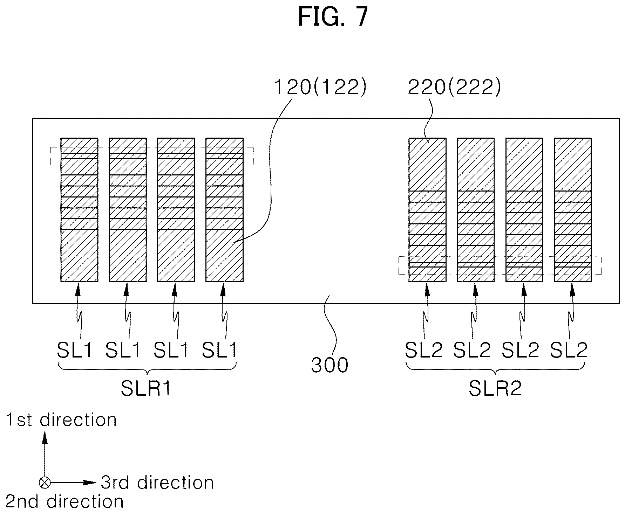

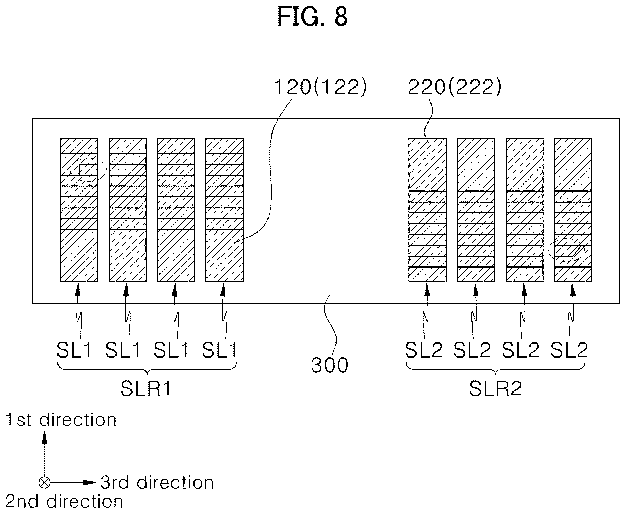

FIGS. 7 and 8 are plan views illustrating examples of misalignment of uncoated portions included in an electrode tab.

Referring to FIG. 7, as indicated by a dotted box, a region where intervals between adjacent uncoated portions 122 and 222 are not constant due to an alignment error caused by a partial non-uniform bending of the uncoated portions 122 and 222.

Referring to FIG. 8, as indicated by a dotted circle, among the uncoated portions 122 and 222, an uncoated portion having a reduced length in the third direction may be present due to a folding defect.

According to embodiments of the present disclosure, the alignment state of the uncoated portions 122 and 222 may be confirmed through the slot SL, and the assembly group AG including the above-described defects may be excluded from a subsequent process or the defects may be corrected.

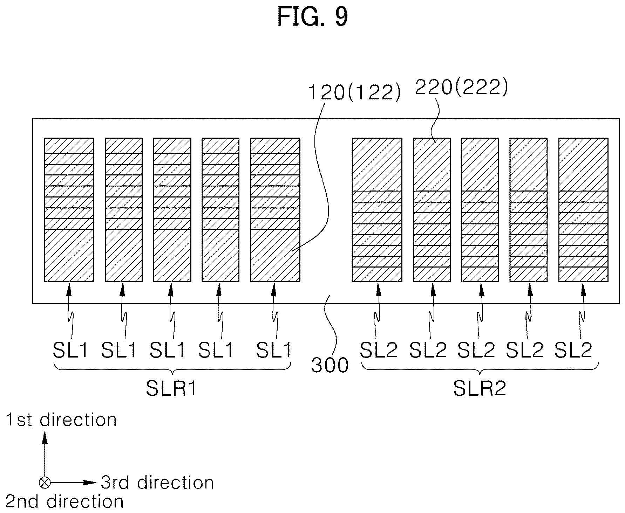

FIG. 9 is a schematic plan view illustrating a secondary battery according to embodiments.

Referring to FIG. 9, a size of the slot SL disposed at an outer region may be increased. According to embodiments, a size of the first slot SL1 disposed at an end region of the first slot row SLR1 may be increased. For example, the size of the first slot SL1 disposed at the end region of the first slot row SLR1 may be larger than a size of the first slot SL1 disposed at a central region of the first slot row SLR1. For example, the length Ds of the short side SS of the first slot SL1 disposed at the end region may be relatively increased.

A size of the second slot SL2 disposed at an end region of the second slot row SLR2 may be increased. For example, a size of the second slot SL2 disposed at the end region of the second slot row SLR2 may be larger than a size of the second slot SL2 disposed at a central region of the second slot row SLR2. For example, the length Ds of the short side SS of the second slot SL2 disposed at the end region may be relatively increased.

In some embodiments, each of the first slots SL1 disposed at both end regions (one end region and the other end region) of the first slot row SLR1 may have an increased size. Each of the second slots SL2 disposed at both end regions (one end region and the other end region) of the second slot row SLR2 may have an increased size.

As described above, the size of the slot SL disposed at the end region or the outer region may be increased, so that alignment and bending defects that may frequently occur at an end portion of the electrode tabs 120 and 220 may be easily detected.

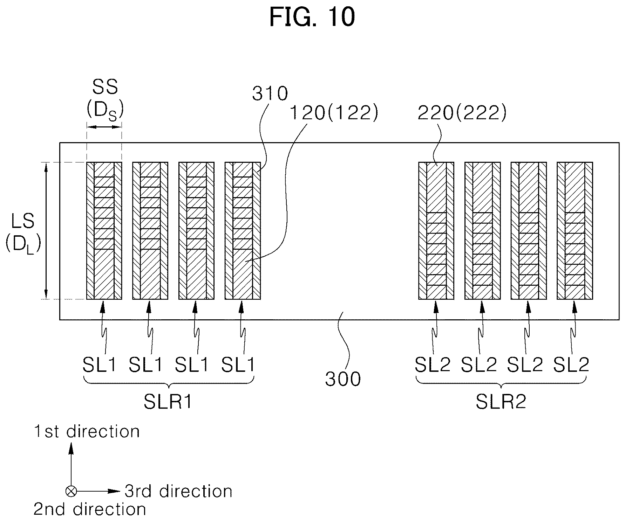

FIG. 10 is a schematic plan view illustrating a secondary battery according to embodiments.

Referring to FIG. 10, the secondary battery may further include a welding portion 310. For example, the welding portion 310 may be formed along portions of the electrode tabs 120 and 220 exposed through the slot SL and a sidewall of the slot SL through a laser welding. A sufficient welding area with the electrode tabs 120 and 220 may be achieved using the sidewall of the slot SL.

In example embodiments, the welding portion 310 may be formed along a pair of the long sides LS opposing each other of the slot SL1 and SL2. In some embodiments, a pair of the welding portions 310 may be physically spaced apart from each other with the short side SS of the slot SL1 and SL2 interposed therebetween.

As described above, a sufficient bonding area may be achieved by using the long side LS of the slot SL. Thus, electrical connection stability of the electrode tabs 120 and 220 and the current collector plate 300 may be sufficiently achieved while reducing a total volume or amount of the welding portions 310.

In some embodiments, the welding portion 310 may be formed by a fillet welding. The welding portion 310 may be formed even at a low energy and a low temperature through the fillet welding using the slot SL. Thus, foreign substances generated by the welding process may be prevented from being introduced into the electrode assemblies 100 and 200.

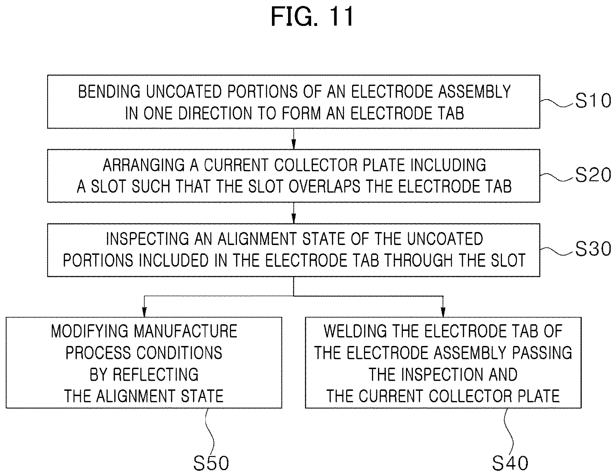

FIG. 11 is a flowchart illustrating a method of manufacturing a secondary battery according to embodiments.

Referring to FIG. 11, the electrode assemblies 100 and 200 may be combined to prepare the assembly group AG. The first electrode tab 120 and the second electrode tab 220 bent in opposite directions may be formed by bending the uncoated portions 122 and 222 of the electrode assemblies 100 and 200 as described above (e.g., in an operation of S10).

For example, in an operation of S20, the current collector plate 300 including the slot SL may be aligned on the electrode tabs 120 and 220 as illustrated in FIG. 5. In example embodiments, the current collector plate 300 may be aligned on the electrode tab surface TS of the assembly group AG such that the slot SL may overlap the uncoated portions 122 and 222 of the electrode tabs 120 and 220.

For example, in an operation of S30, an alignment state of the uncoated portions 122 and 222 included in the electrode tabs 120 and 220 may be inspected through the slot SL. Accordingly, the bending/folding failure state of the uncoated portions 122 and 222 illustrated in FIGS. 7 and 8 may be checked.

For example, in the case of the assembly group AG passing the inspection of alignment of the uncoated portions through the slot SL in an operation of S40, a welding process of the current collector plate 300 and the electrode tabs 120 and 220 may be performed through the slot SL as illustrated in in FIG. 10. Accordingly, the welding portion 310 may be formed along the long side LS of the slot SL.

As illustrated in FIG. 1, the current collector plate 300 may be welded in a state of being coupled to the cover 410 of the cap plate 400. Thereafter, the assembly group AG may be inserted into and coupled to the accommodation space 510 of the case 500 together with the cap plate 400. Thereafter, the above-described electrolyte solution may be injected through the injection hole 440.

For example, in an operation of S50, when the bending/folding defect state of the uncoated portions 122 and 222 illustrated in FIGS. 7 and 8 was detected, manufacture process conditions may be modified to reflect the defect shape.

The manufacture process conditions may include arrangement of manufacture facilities or devices, alignment of device components, or the like. For example, when misalignment of the uncoated portions 122 and 222 occurs, re-alignment of a bending jig, an alignment device, etc., of the uncoated portions 122 and 222 to desired positions, replacement of defective parts, etc., may be performed.

Accordingly, process reliability before the welding process may be improved, and thus overall reproductivity of the secondary battery process may be improved.

The present disclosure includes the following numbered aspects:
Aspect 1: A secondary battery, comprising: a first electrode assembly including a first electrode tab that includes a plurality of first uncoated portions, each of the first uncoated portions being bent in a first direction; a second electrode assembly stacked on the first electrode assembly in the first direction, wherein the second electrode assembly includes a second electrode tab including a plurality of second uncoated portions, each of the second uncoated portions being bent in a direction opposite to the first direction; and a current collector plate electrically connected to the first electrode tab and the second electrode tab, the current collector plate including a slot exposing the first electrode tab and the second electrode tab.
Aspect 2: The secondary battery of aspect 1, wherein the first electrode assembly and the second electrode assembly are adjacent to each other to define an assembly group, and the first electrode tab and the second electrode tab are spaced apart on one lateral surface of the assembly group in a third direction corresponding to a height direction of the assembly group and being perpendicular to the first direction.
Aspect 3: The secondary battery of aspect 2, wherein the current collector plate includes a plurality of the slots arranged along the third direction.
Aspect 4: The secondary battery of aspect 3, wherein the slots include first slots partially exposing the first electrode tab and forming a first slot row, and second slots partially exposing the second electrode tab and forming a second slot row.
Aspect 5: The secondary battery of aspect 4, wherein a first slot located at an end region of the first slot row in the third direction among the first slots has an area greater than an area of a first slot located at a central region of the first slot row.
Aspect 6: The secondary battery of aspect 4, wherein a second slot located at an end region of the second slot row in the third direction among the second slots has an area greater than an area of a second slot located at a central region of the second slot row.
Aspect 7: The secondary battery of any one of aspects 2 to 6, wherein the slot has a long side in the first direction and a short side in the third direction.
Aspect 8: The secondary battery of aspect 7, further comprising a welding portion formed at a boundary between the current collector plate, and the first electrode tab or the second electrode tab exposed by the slot along the long side of the slot.
Aspect 9: The secondary battery of aspect 8, wherein the welding portion is formed along the long sides of the slot opposing each other.
Aspect 10: The secondary battery of aspect 9, wherein a pair of the welding portions are spaced apart with the short side of the slot interposed therebetween.
Aspect 11: A method for manufacturing a secondary battery, comprising: bending uncoated portions in one direction on an electrode tab surface of an electrode assembly to form an electrode tab; arranging a current collector plate including a slot so that the slot overlaps the electrode tab; and inspecting an alignment of the uncoated portions included in the electrode tab through the slot.
Aspect 12: The method of aspect 11, further comprising welding the electrode tab of the electrode assembly passing the alignment inspection of the uncoated portions with the current collector plate.
Aspect 13: The method of aspect 12, further comprising, after the welding, housing the electrode assembly welded to the current collector plate together with the current collector plate in a case; and injecting an electrolyte solution into the case housing the electrode assembly.
Aspect 14: The method of any one of aspects 11 to 13, wherein inspecting the alignment comprises observing bending or folding defects in the uncoated portions.
Aspect 15: The method of any one of aspects 11 to 14, further comprising modifying manufacture process conditions by reflecting the alignment of the uncoated portions observed by the alignment inspection.

## Claims

1. A secondary battery, comprising:
a first electrode assembly including a first electrode tab that includes a plurality of first uncoated portions, each of the first uncoated portions being bent in a first direction;
a second electrode assembly stacked on the first electrode assembly in the first direction, wherein the second electrode assembly includes a second electrode tab including a plurality of second uncoated portions, each of the second uncoated portions being bent in a direction opposite to the first direction; and
a current collector plate electrically connected to the first electrode tab and the second electrode tab, the current collector plate including a slot exposing the first electrode tab and the second electrode tab.

2. The secondary battery of claim 1, wherein the first electrode assembly and the second electrode assembly are adjacent to each other to define an assembly group, and
the first electrode tab and the second electrode tab are spaced apart on one lateral surface of the assembly group in a third direction corresponding to a height direction of the assembly group and being perpendicular to the first direction.

3. The secondary battery of claim 2, wherein the current collector plate includes a plurality of the slots arranged along the third direction.

4. The secondary battery of claim 3, wherein the slots include first slots partially exposing the first electrode tab and forming a first slot row, and second slots partially exposing the second electrode tab and forming a second slot row.

5. The secondary battery of claim 4, wherein a first slot located at an end region of the first slot row in the third direction among the first slots has an area greater than an area of a first slot located at a central region of the first slot row.

6. The secondary battery of claim 4, wherein a second slot located at an end region of the second slot row in the third direction among the second slots has an area greater than an area of a second slot located at a central region of the second slot row.

7. The secondary battery of any one of claims 2 to 6, wherein the slot has a long side in the first direction and a short side in the third direction.

8. The secondary battery of claim 7, further comprising a welding portion formed at a boundary between the current collector plate, and the first electrode tab or the second electrode tab exposed by the slot along the long side of the slot.

9. The secondary battery of claim 8, wherein the welding portion is formed along the long sides of the slot opposing each other.

10. The secondary battery of claim 9, wherein a pair of the welding portions are spaced apart with the short side of the slot interposed therebetween.

11. A method for manufacturing a secondary battery, comprising:
bending uncoated portions in one direction on an electrode tab surface of an electrode assembly to form an electrode tab;
arranging a current collector plate including a slot so that the slot overlaps the electrode tab; and
inspecting an alignment of the uncoated portions included in the electrode tab through the slot.

12. The method of claim 11, further comprising welding the electrode tab of the electrode assembly passing the alignment inspection of the uncoated portions with the current collector plate.

13. The method of claim 12, further comprising, after the welding, housing the electrode assembly welded to the current collector plate together with the current collector plate in a case; and
injecting an electrolyte solution into the case housing the electrode assembly.

14. The method of any one of claims 11 to 13, wherein inspecting the alignment comprises observing bending or folding defects in the uncoated portions.

15. The method of any one of claims 11 to 14, further comprising modifying manufacture process conditions by reflecting the alignment of the uncoated portions observed by the alignment inspection.
